# EUROPÄISCHE PATENTSCHRIFT

(11) **EP 2 131 059 B1**
(45) Veröffentlichungstag und Bekanntmachung des Hinweises auf die Patenterteilung: **27.03.2013**
(21) Anmeldenummer: 09161325.7
(22) Anmeldetag: 28.05.2009
(51) Int. Cl.: F16F 9/05, F16F 9/512

(54) **Luftfeder mit integriertem Steuerventil**
Pneumatic spring with integrated control valve
Ressort pneumatique doté d'une soupape de commande intégrée

(30) Priorität: 05.06.2008 DE 102008002222
(43) Veröffentlichungstag der Anmeldung: 09.12.2009
(60) Teilanmeldung: 10190083.5
(73) Patentinhaber: ZF Friedrichshafen AG, 88038 Friedrichshafen (DE)
(72) Erfinder: Markert-Hess, Christine, 97502, Euerbach (DE); Friedrich, Harald, 97535, Wasserlosen (DE); Memmel, Alfred, 97453, Schonungen (DE)

(56) Entgegenhaltungen:
- DE-A1- 4 409 252
- DE-A1- 10 003 045
- DE-A1-102004 012 881
- DE-C1- 10 200 553
- DE-U1- 20 219 883
- US-A1- 2002 113 463
- US-B1- 6 332 624

## Beschreibung

Die Erfindung betrifft eine Luftfeder mit integriertem Steuerventil gemäß dem Oberbegriff von Patentanspruch 1.

Aus der gattungsbildenden DE 102 00 553 C1 ist eine Luftfeder gemäß der Figur 1 bekannt. Die Luftfeder 1 umfasst ein Abrollrohr 3, an dem endseitig ein Rollbalg 5 fixiert ist. Das andere Ende des Rollbalgs ist mit einer Kappe 7 verbunden, die wiederum an einer Kolbenstange 9 eines Schwingungsdämpfers 11 befestigt ist. An einem äußeren Zylinder 13 des Schwingungsdämpfers 11 stützt sich axial und radial das Abrollrohr 3 ab.

Das Abrollrohr 3 verfügt über eine trichterförmige Öffnung, in der neben dem Zylinder 13 eine Feder 15 angeordnet ist, die auf ein axial bewegliches Steuerelement 17 wirkt, an dem endseitig Kraftübertragungsbauteil 19 befestigt ist. Zwischen dem Kraftübertragungsteil 19 und der Kappe 7 kann entweder eine zweite Feder 21 verspannt sein oder das Kraftübertragungsteil 19 ist direkt mit der Kappe 7 verbunden.

Bei einer Luftfeder mit einer zweiten Feder wird die maximale Ausfahrposition des Steuerelements von einem Axialanschlag 23 bestimmt, der sich an einem Ringgehäuse 25 innerhalb des Abrollrohrs 3 abstützt. Das Ringgehäuse 25, das auch ein Steuerventil 27 zur Niveauregulierung eines Fahrwerks oder auch einer Fahrzeugkabine aufnimmt, wird über einen topfförmigen Befestigungsring 29, der eine Durchgangsöffnung für das Ringgehäuse 25 aufweist, axial mit dem Abrollrohr 3 verschraubt. Das Kraftübertragungsbauteil 19 kann erst befestigt werden, wenn das Steuerelement 17 in das Ringgehäuse 25 eingeschoben ist, da der Axialanschlag 23 eine nachträgliche Montage verhindert.

Die beschriebene Bauweise der Luftfeder, insbesondere die komplexen Bauteile für die Steuerfunktion, beeinflussen in hohem Maß die Herstellungskosten, so dass die Aufgabe darin zu sehen ist, bei vergleichbarer Funktionalität einen Kostenvorteil zu erreichen.

Erfindungsgemäß wird die Aufgabe dadurch gelöst, dass das Ringgehäuse mittels einer Rastverbindung am Abrollrohr fixiert ist.

Durch den Wegfall der bisherigen Schraubverbindung kann eine weitere Montagevereinfachung erreicht werden.

In weiterer vorteilhafter Ausgestaltung der Erfindung wird die Rastverbindung von einer Anzahl von Rasthaken gebildet, die sich an einem radialen Absatz axial abstützen.

Dabei ist vorgesehen, dass das Abrollrohr innenseitig den radialen Absatz aufweist.

Das Ringgehäuse weist einen Befestigungsring auf, der sich axial an einer Schulter des Abrollrohrs abstützt. Diese einteilige Bauweise stellt eine zusätzliche Bauteilvereinfachung dar, da der bisherige Metallring als Einzelteil entfällt.

Gegen einen Druckluftverlust der Luftfeder trägt der Befestigungsring eine in Richtung der Schulter weisende Dichtung.

Eine besonders einfache Konstruktion ergibt sich, wenn die Dichtung einteilig mit dem Befestigungsring ausgeführt ist. Die Dichtung wird dann z. B. von einem umlaufenden Wulst des Befestigungsrings gebildet.

Eine besonders einfache Rollbalgbefestigung wird dadurch erreicht, dass das Ringgehäuse mit einer Radialfläche des Abrollrohrs eine Nut zur Aufnahme eines Klemmabschnitts des Rollbalgs bildet.

Der Montageablauf sich lässt besonders prozesssicher gestalten, indem das ringförmige Bauteil einen Konusbereich aufweist, dessen Durchmesser sich in Richtung der Nut vergrößert.

Anhand der folgenden Figurenbeschreibung soll die Erfindung näher erläutert werden:

Es zeigt:

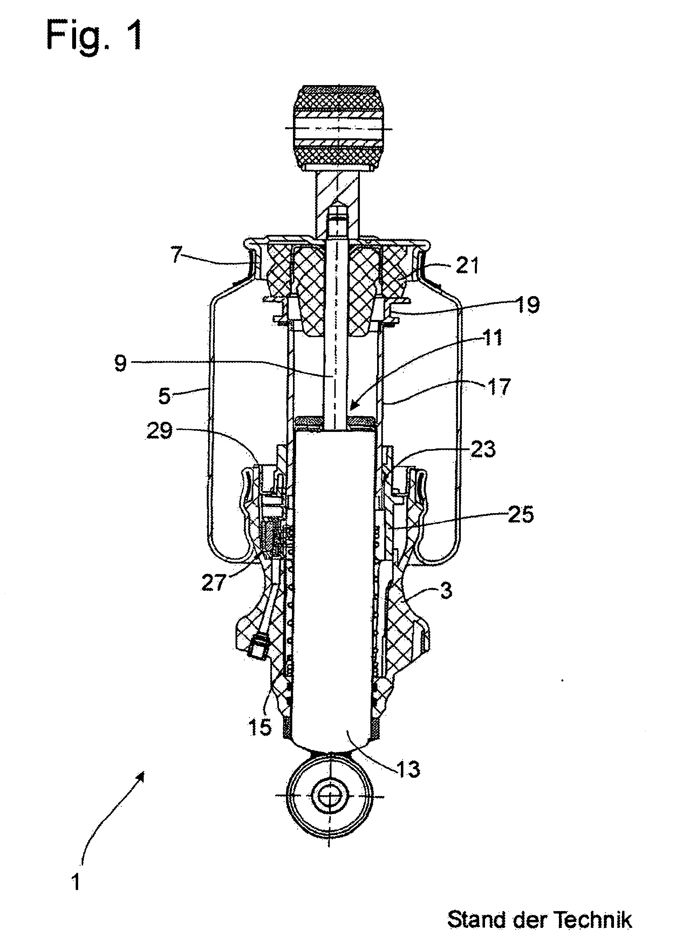

- Fig. 1: Luftfeder, wie aus dem Stand der Technik bekannt
- Fig. 2: Steuerelement als Einzelteil
- Fig. 3: Abrollrohr mit Ringgehäuse und Steuerelement als Einzelteil
- Fig. 4: Detaildarstellung zur Fig. 3
- Fig. 5: Ringgehäuse als Einzelteil
- Fig. 6: Abrollrohr mit Innenansicht
- Fig. 7 u. 8: Luftfeder in Schnittdarstellung im Bereich der Rollbalgbefestigung

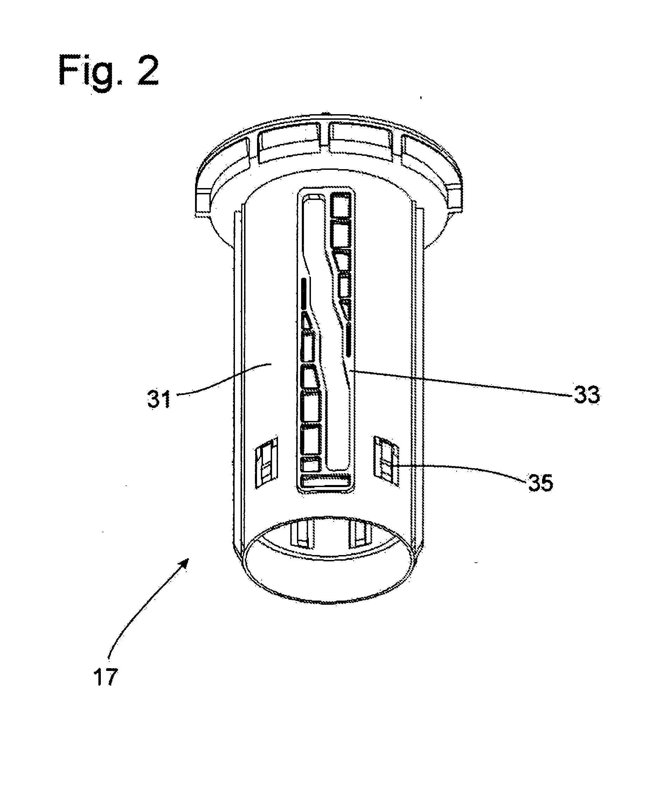

Die Fig. 2 zeigt das Steuerelement 17 als Einzelteil. Das Steuerelement 17 umfasst einen Rohrkörper 31 mit einer Führungsbahn 33, in die ein Übertragungselement des Steuerventils 27 eingreift, wobei hubabhängiger Versatz innerhalb der Führungsbahn in eine Schwenkbewegung umgesetzt wird, die wiederum die Schaltpositionen des Steuerventils 27 bestimmen.

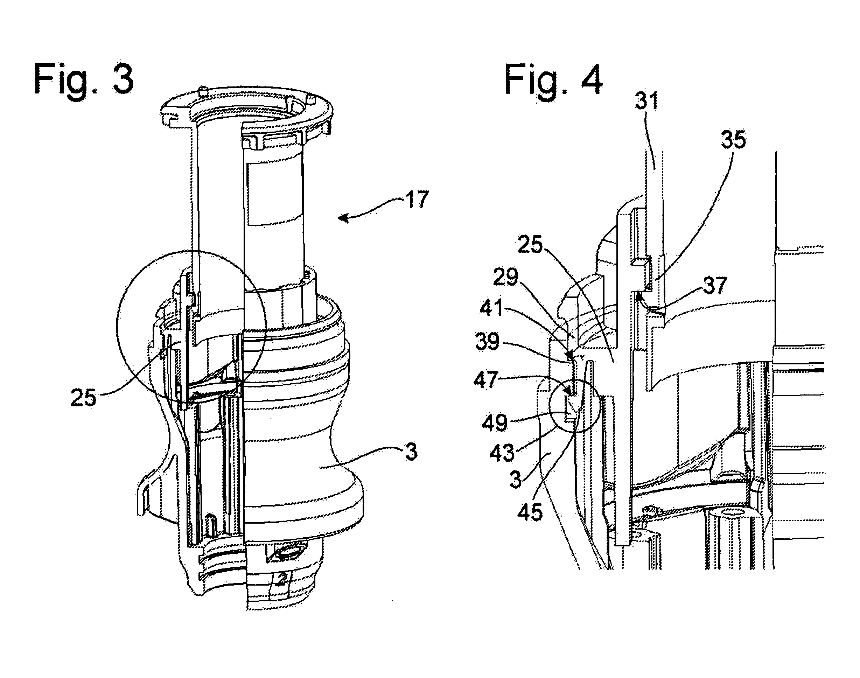

Das Steuerelement 17 besteht bevorzugt aus Kunststoff und ist einstückig mit dem Kraftübertragungselement 19 ausgeführt. In der Mantelfläche des Rohrkörpers 31 ist mindestens ein hakenförmiger Anschlag 35 freigeschnitten, so dass der Anschlag 35 radialelastisch ist. In der Zusammenschau mit den Fig. 3 und 4 wird die im Vergleich zum Stand der Technik vereinfachte Montage deutlich. Das Steuerelement 17 kann bei bereits montiertem Ringgehäuse 25 in das Ringgehäuse 25 eingeschoben werden, da der Axialanschlag 35 für das Steuerelement 17 von einem radial beweglichen Element gebildet wird und sich bei der Montage radial nach außen bewegen lässt, um einen Rücksprung 37 an der Innenwandung des Ringgehäuses 25 hintergreifen zu können.

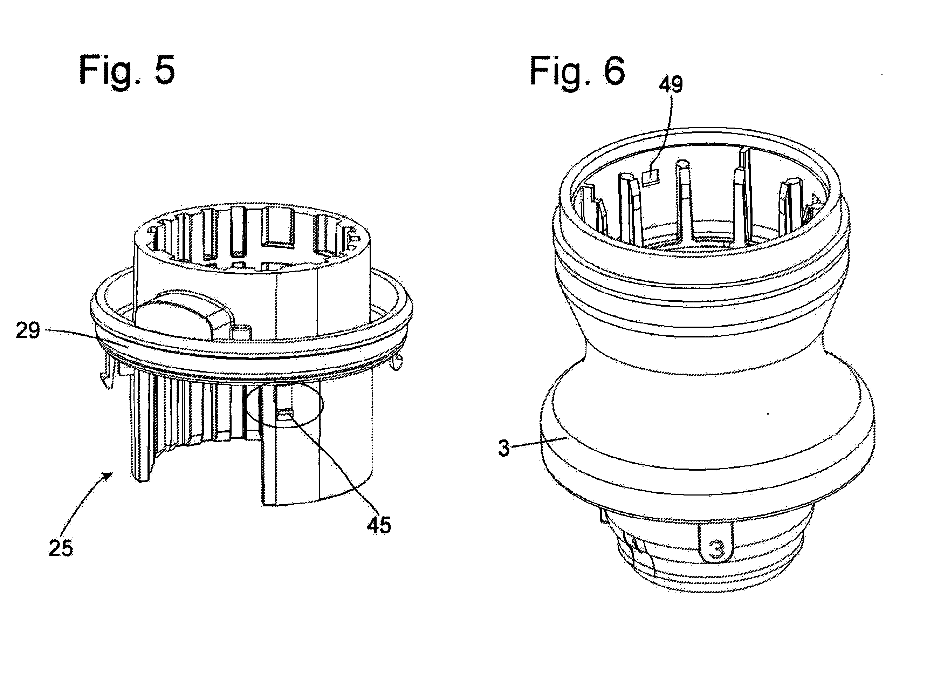

Die Figuren 5 und 6 zeigen einen weiteren von der Ausgestaltung des Steuerelements 17 unabhängigen Lösungsansatz für die Vereinfachung der Luftfeder 1. Zum einen weist das Ringgehäuse 25, das ebenfalls aus Kunststoff besteht, einen integrierten Befestigungsring 29 auf. Dieser Befestigungsring 29 stützt sich, wie die Fig. 3 und 4 zeigen, auf einer Schulter 39 des Abrollrohrs 3 ab. Zu Verhinderung einer Leckage trägt der Befestigungsring 29 eine in Richtung der Schulter 39 weisende Dichtung 41. Die Dichtung kann einteilig mit dem Befestigungsring ausgeführt sein, indem sie z. B von einem umlaufenden Wulst des Befestigungsrings gebildet wird.

Auch das Ringgehäuse 25 ist mittels einer Rastverbindung 43 am Abrollrohr 3 fixiert. Die Rastverbindung wird von einer Anzahl von Rasthaken 45 gebildet, die sich an einem radialen Absatz 47 abstützen, der innenseitig am Abrollrohr 3 ausgeführt ist. Der Absatz muss nicht unbedingt von einem umlaufenden Ringsteg gebildet werden, sondern kann, wie die Figur 4 zeigt, auch in Form von Taschen 49 realisiert sein. Das Ringgehäuse kann durch einfaches Einstecken in das Abrollrohr 3 montiert werden, ohne dass eine weitere Befestigungsmittel, z. B. Schrauben, notwendig sind.

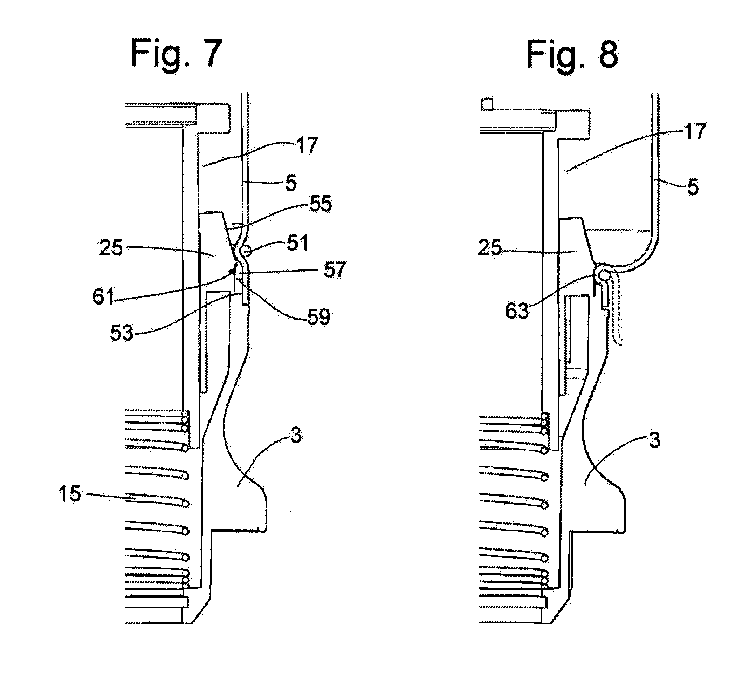

Mit der Fig. 7 und 8 soll noch ein weiterer Vorteil beschrieben werden. Der Rollbalg 5 wird im drucklosen Zustand von einem Klemmring 51, der einen kleineren Innendurchmesser aufweist als eine radiale Zentrierfläche 53 des Abrollrohres 3, auf einen Konusbereich 55 des Ringgehäuses 25 vorgespannt. Dieser Konusbereich 55 erweitert sich in Richtung einer Nut 57, die von einer Radialfläche 59 des Abrollrohrs 3 und einem Rücksprung 61 an der Unterseite des Konusbereichs 55 gebildet wird. Bei einer Befüllung der Luftfeder gleitet der Klemmring 51 am Konusbereich 55 in Richtung der Nut 57 und rastet dort zusammen mit einem Klemmabschnitt 63 des Rollbalgs 5 ein. Der Druck in der Luftfeder sorgt für eine Faltenbildung, die den Rollbalg druckdicht am Abrollrohr 3 hält. Die Fixierkraft des Rollbalgs erfolgt druckabhängig, wobei über den Klemmabschnitt 63 auch zusätzlich das Ringgehäuse 25 fixiert wird. Insgesamt wird nicht nur eine vereinfachte Montage, sondern auch noch eine Funktionsverbesserung erreicht.

### Bezugszeichenliste

- Luftfeder: 1
- Abrollrohr: 3
- Rollbalg: 5
- Außenrohr: 7
- Kolbenstange: 9
- Schwingungsdämpfer: 11
- Zylinder: 13
- Feder: 15
- Steuerelement: 17
- Kraftübertragungsbauteil: 19
- zweite Feder: 21
- Axialanschlag: 23
- Ringgehäuse: 25
- Steuerventil: 27
- Befestigungsring: 29
- Rohrkörper: 31
- Führungsbahn: 33
- hakenförmiger Anschlag: 35
- Rücksprung: 37
- Schulter: 39
- Dichtung: 41
- Rastverbindung: 43
- Rasthaken: 45
- Absatz: 47
- Taschen: 49
- Klemmring: 51
- Zentrierfläche: 53
- Konusbereich: 55
- Nut: 57
- Radialfläche: 59
- Rücksprung: 61
- Klemmabschnitt: 63

## Patentansprüche

1. Luftfeder (1) mit integriertem Steuerventil (27), umfassend ein Abrollrohr (3), an dem ein Rollbalg (5) befestigt ist, wobei das Abrollrohr (3) ein axial bewegliches Steuerelement (17) aufnimmt, das an seinem einen Ende ein Kraftübertragungsbauteil (19) und an seinem anderen Ende einen Axialanschlag (23) zur Begrenzung der Axialbewegung aufweist, wobei sich der Axialanschlag (23) an einem Ringgehäuse (25) abstützt, das wiederum über Befestigungsmittel mit dem Abrollrohr (3) verbunden ist,
**dadurch gekennzeichnet,**
**dass** das Ringgehäuse (25) mittels einer Rastverbindung (43) am Abrollrohr (3) fixiert ist.

2. Luftfeder nach Anspruch 1,
**dadurch gekennzeichnet,**
**dass** die Rastverbindung (43) von einer Anzahl von Rasthaken (45) gebildet wird, die sich an einem radialen Absatz (47) axial abstützen.

3. Luftfeder nach Anspruch 2,
**dadurch gekennzeichnet,**
**dass** das Abrollrohr (3) innenseitig den radialen Absatz (47) aufweist.

4. Luftfeder nach Anspruch 1,
**dadurch gekennzeichnet,**
**dass** das Ringgehäuse (25) einen Befestigungsring (29) aufweist, der sich axial an einer Schulter (39) des Abrollrohrs (3) abstützt.

5. Luftfeder nach Anspruch 4,
**dadurch gekennzeichnet,**
**dass** der Befestigungsring (29) eine in Richtung der Schulter (39) weisende Dichtung (41) vorspannt.

6. Luftfeder nach Anspruch 5,
**dadurch gekennzeichnet,**
**dass** die Dichtung (41) einteilig mit dem Befestigungsring (29) ausgeführt ist.

7. Luftfeder nach Anspruch, 1
**dadurch gekennzeichnet,**
**dass** das Ringgehäuse (25) mit einer Radialfläche (59) des Abrollrohrs (3) eine Nut (57) zur Aufnahme eines Klemmabschnitts (63) des Rollbalgs (5) bildet.

8. Luftfeder nach Anspruch 7,
**dadurch gekennzeichnet,**
**dass** das Ringgehäuse (25) einen Konusbereich (55) aufweist, dessen Durchmesser sich in Richtung der Nut (57) vergrößert.

## Claims

1. Pneumatic spring (1) with integrated control valve (27), comprising a rolling tube (3) to which a concertina (5) is fastened, the rolling tube (3) receiving an axially movable control element (17) which has at one end a force transmission component (19) and at its other end an axial stop (23) for limiting the axial movement, the axial stop (23) being supported on an annular housing (25) which is connected in turn to the rolling tube (3) via fastening means, **characterized in that** the annular housing (25) is fixed to the rolling tube (3) by means of a latching connection (43).

2. Pneumatic spring according to Claim 1, **characterized in that** the latching connection (43) is formed by a number of latching hooks (45) which are supported axially on a radial step (47).

3. Pneumatic spring according to Claim 2, **characterized in that** the rolling tube (3) has the radial step (47) on the inside.

4. Pneumatic spring according to Claim 1, **characterized in that** the annular housing (25) has a fastening ring (29) which is supported axially on a shoulder (39) of the rolling tube (3).

5. Pneumatic spring according to Claim 4, **characterized in that** the fastening ring (29) prestresses a seal (41) pointing in the direction of the shoulder (39).

6. Pneumatic spring according to Claim 5, **characterized in that** the seal (41) is formed in one part with the fastening ring (29).

7. Pneumatic spring according to Claim 1, **characterized in that** the annular housing (25) forms, with a radial surface (59) of the rolling tube (3), a groove (57) for receiving a clamping portion (63) of the concertina (5).

8. Pneumatic spring according to Claim 7, **characterized in that** the annular housing (25) has a conical region (55), the diameter of which increases in the direction of the groove (57).

## Revendications

1. Ressort pneumatique (1) doté d'une soupape de commande intégrée (27), comprenant un tube déroulant (3) sur lequel est fixé un soufflet roulant (5), le tube déroulant (3) recevant un élément de commande (17) déplaçable axialement, qui présente à l'une de ses extrémités un composant de transfert de force (19) et à son autre extrémité une butée axiale (23) pour limiter le mouvement axial, la butée axiale (23) s'appuyant sur un boîtier annulaire (25) qui est à son tour connecté par le biais de moyens de fixation au tube déroulant (3),
**caractérisé en ce que**
le boîtier annulaire (25) est fixé au moyen d'une connexion par encliquetage (43) au tube déroulant (3).

2. Ressort pneumatique selon la revendication 1,
**caractérisé en ce que**
la connexion par encliquetage (43) est formée par une pluralité de crochets d'encliquetage (45) qui s'appuient axialement contre un épaulement radial (47).

3. Ressort pneumatique selon la revendication 2,
**caractérisé en ce que**
le tube déroulant (3) présente, du côté intérieur, l'épaulement radial (47).

4. Ressort pneumatique selon la revendication 1,
**caractérisé en ce que**
le boîtier annulaire (25) présente une bague de fixation (29) qui s'appuie axialement contre un épaulement (39) du tube déroulant (3).

5. Ressort pneumatique selon la revendication 4,
**caractérisé en ce que**
la bague de fixation (29) précontraint un joint d'étanchéité (41) tourné dans la direction de l'épaulement (39).

6. Ressort pneumatique selon la revendication 5,
**caractérisé en ce que**
le joint d'étanchéité (41) est réalisé d'une seule pièce avec la bague de fixation (29).

7. Ressort pneumatique selon la revendication 1,
**caractérisé en ce que**
le boîtier annulaire (25) forme avec une surface radiale (59) du tube déroulant (3) une rainure (57) pour recevoir une portion de serrage (63) du soufflet roulant (5) .

8. Ressort pneumatique selon la revendication 7,
**caractérisé en ce que**
le boîtier annulaire (25) présente une région conique (55) dont le diamètre augmente dans la direction de la rainure (57).
